# EUROPÄISCHE PATENTANMELDUNG

(11) **EP 2 031 542 A1**
(43) Veröffentlichungstag der Anmeldung: **04.03.2009**
(21) Anmeldenummer: 08104142.8
(22) Anmeldetag: 28.05.2008
(51) Int. Cl.: G06K 7/00, G06K 19/14, F16K 37/00, G05B 19/418

(54) **Ventileinheit mit elektronischen Ventilerkennungsmitteln**

(30) Priorität: 30.08.2007 DE 102007041262
(71) Anmelder: Robert Bosch GmbH, 70442 Stuttgart (DE)
(72) Erfinder: Krebs, Herbert, 30823 Garbsen (DE); Jacobs, Frank, 30559 Hannover (DE)
(74) Vertreter: Kietzmann, Lutz

(57) **Zusammenfassung**

Ventileinheit mit mehreren aneinandergereihten Ventilen (1; 1') zum Schalten eines Druckluftflusses, wobei aus je ventilseitigen Transpondern (3) und einer Leseeinrichtung bestehende elektronische Mittel zur Ventilerkennung vorgesehen sind, welche aus einzelnen, je einem Transponder (3; 3') zugeordneten RFID-Leseköpfen (4; 4') sowie einer allen RFID-Leseköpfen (4; 4') gemeinsamen RFID-Leseeinheit (7; 7') besteht, wobei die RFID-Leseköpfe (4; 4') mit der RFID-Leseeinheit (7; 7') über eine Multiplexereinheit (6; 6') verbunden sind.

## Beschreibung

Die vorliegende Erfindung betrifft eine Ventileinheit mit mehreren aneinandergereihten Ventilen zum Schalten eines Druckluftflusses, welche je mindestens einem Grundelement zur fluidischen und/oder elektrischen Anwendung zugeordnet sind, wobei aus je ventilseitigen Transpondern und einer grundelementseitigen Leseeinrichtungen bestehende elektronische Mittel zur Ventilerkennung vorgesehen sind.

Das Einsatzgebiet pneumatischer Ventileinheiten erstreckt sich vornehmlich auf pneumatische Automatisierungssysteme, mit welchen Arbeitsprozesse durchgeführt werden. In einer Ventileinheit sind mehrere Ventile, die zur Ansteuerung von Pneumatikaggregaten, wie Druckluftzylindern, dienen örtlich zusammengefasst und können so zentral mit Druckluft und mit elektrischen Steuersignalen versorgt werden. Ventileinheiten können auch Ventile mit direkt gehäusemäßig integrierten Grundelementen besitzen, bei denen Kanalabschnitte zur Druckluftver- und -entsorgung das Ventilgehäuse mit integriert sind. Bei der hier interessierenden Ausgestaltungsform von Ventileinheiten sind die Ventile jedoch separat von Grundelementen ausgebildet. Dies ermöglicht einen Austausch einzelner Ventile im Wartungsfall, ohne Einfluss auf die gemeinsame Druckluftversorgung nehmen zu müssen. Dabei kann jedem einzelnen Ventil ein eigenes Grundelement zugeordnet sein, welche wiederum über korrespondierende Kanalabschnitte aneinandergereiht sind. Daneben ist die vorliegende Erfindung auch auf einstückige Grundelemente anwendbar, welche je zur zumindest Druckluftversorgung mehrerer Ventile dienen,

Aus der DE 10 2005 041 510 A1 geht eine gattungsgemäße Ventileinheit hervor. Hierbei sind als Ventilaufnahme bezeichnete Grundelemente vorgesehen, welche je wenigstens ein Ventil zur Druckluftver- und -entsorgung aufnehmen. Gleichzeitig erfolgt über die Ventilaufnahme auch die elektrische Anbindung der Ventile und die Übermittlung von Steuersignalen an die Ventile, wobei elektronische Mittel zur Ventilerkennung eine Identifikation der Ventile hinsichtlich technischer Daten, wie elektrische Anschlussparameter und dergleichen gestatten. Diese Informationen werden über die Ventilaufnahme an eine zentrale Steuereinheit weitergeleitet, welche die korrekte Ventilbestückung der Ventileinheit überwacht. Technisch wird die Ventilerkennung dadurch realisiert, dass in jedem Ventilgehäuse ein elektronischer Transponder mit den vorgenannten Kenndaten implementiert ist, welcher mittels eines zugeordneten Lesegeräts seitens der Ventilaufnahme auslesbar ist. Die ausgelesenen Daten werden von den einzelnen Lesegeräten in vorstehend beschriebener Weise der zentralen Steuereinheit zur Auswertung zur Verfügung gestellt. Nachteilig bei dieser technischen Lösung erweist sich deren hoher Aufwand an elektronischen Bauteilen. Denn jedem einzelnen Transponder ist seitens des Grundelements ein eigenes Lesegerät zugeordnet.

Es ist daher die Aufgabe der vorliegenden Erfindung, eine Ventileinheit mit elektronischen Mitteln zur Ventilerkennung dahingehend weiter zu verbessern, dass der mit der Ventilerkennung erforderliche Aufwand an elektronischen Bauelementen minimiert wird.

Die Aufgabe wird ausgehend von einer Ventileinheit gemäß dem Oberbegriff von Anspruch 1 in Verbindung mit dessen kennzeichnenden Merkmalen gelöst. Die nachfolgenden abhängigen Ansprüche geben vorteilhafte Weiterbildungen der Erfindung wieder.

Die Erfindung schließt die technische Lehre ein, dass die zur Ventilerkennung erforderliche Leseeinrichtung aus einzelnen, je einem Transponder zugeordneten RFID-Leseköpfen (RFID = "Radio Frequency Identification") sowie einer allen RFID-Leseköpfen gemeinsamen RFID-Leseeinheit besteht, wobei die RFID-Leseköpfe mit der einzigen RFID-Leseeinheit über eine Multiplexereinheit verbunden sind.

Der Vorteil der erfindungsgemäßen Lösung liegt insbesondere darin, dass eine RFID-Leseeinheit nur einmal pro Ventileinheit erforderlich ist. Der zusätzliche elektronische Aufwand in Form der Multiplexereinheit ist vertretbar, da derartige elektronische Bauelemente als Massenware zur Verfügung stehen. Ein Multiplexer ist ein Selektionsschaltnetz in der analogen Elektronik sowie der Digitaltechnik, mit dem eine Anzahl von Eingängen nacheinander ausgewählt werden können. Der durch einen zyklischen Durchlauf aller Eingangssignale wandelt die Multiplexereinheit die parallelen Datenströme in serielle um. Die im Rahmen der erfindungsgemäßen Lösung zum Einsatz kommenden RFID-Leseköpfe sind vorzugsweise lediglich Antennen, welche aus Spulen gebildet werden können, um die jeweils zugeordneten Transponder zu aktivieren sowie deren Daten zum bestimmungsgemäßen Zweck auszulesen. Hierdurch kann eine separate Leseeinheit unter jedem Steckplatz eines Ventils eingespart werden.

Für aneinandergereihte Ventile, welche ihre fluidische und/oder elektrische Versorgung durch längs entlang von Ventil zu Ventil intern verlaufenden Kanälen beziehen, wird die Aufgabe dadurch gelöst, dass der Transponder der Leseeinrichtung im Bereich einer ersten Kontaktfläche der aneinandergereihten Ventile angeordnet ist, während im Bereich der zweiten Kontaktfläche des Ventils ein RFID-Lesekopf, und zwar auf der Höhe des Transponders angeordnet ist. Werden nun die Ventile aneinandergereiht, so kommt jeder Transponder des hier zugeordneten Ventils mit einem RFID-Lesekopf des benachbart aneinandergereihten Ventils in unmittelbare örtliche Nähe. Über diesen RFID-Lesekopf, welcher Bestandteil der Leseeinrichtung ist, erfolgt ein Auslesen der Daten aus dem Transponder. Hierbei ist allerdings ein zusätzlicher RF1D-Lesekopf in eine stirnseitige Abschlussplatte oder eine stirnseitige Elektronik zu integrieren, um alle Transponder der Ventile auslesen zu können.

Vorzugsweise weist die Ventileinheit neben den Ventilen auch eine Busbox zum Anschluss an eine serielle Datenbusleitung auf, welche weiterhin die Multiplexereinheit mit nachgeschalteter RFID-Leseeinheit mit beinhaltet. Hierdurch kann ein separates Gehäuse für die elektronischen Mittel zur Ventilerkennung entfallen und zur Anbindung an die übergeordnete Steuereinheit kann auf die vorhandene serielle Datenbusleitung zurückgegriffen werden. Alternativ hierzu ist es jedoch auch möglich, die elektronischen Mittel zur Ventilerkennung als eigenständige Baueinheit auszuführen, welche neben der Busbox Bestandteil einer Ventileinheit sein kann.

Die Multiplexereinheit ist vorzugsweise als standardisierter Mehrfach-Multiplexer zum Umwandeln der parallelen Signale der RFID-Leseköpfe in ein serielles Bussignal ausgebildet. Die Anzahl der Eingänge der Multiplexereinheit entspricht mindestens der Anzahl der RFID-Leseköpfe. In diesem Zusammenhang wird gemäß einer weiteren, die Erfindung verbessernden Maßnahme vorgeschlagen, dass die Multiplexereinheit modular aus mehreren Multiplexerelementen mit definierter Anzahl von Eingängen aufgebaut ist. Durch diese Maßnahme kann eine flexible Anpassung an eine gewünschte Anzahl von Ventilen erfolgen. Werden beispielsweise Multiplexerelemente mit je vier Eingängen verwendet, so lassen sich hieraus je nach Bedarf Multiplexereinheiten mit vier, acht, zwölf, usw. Eingängen aufbauen.

Ist der RFID-Lesekopf lediglich nach Art einer Antenne ausgebildet, so wird gemäß einer weiteren, die Erfindung verbessernden Maßnahmen vorgeschlagen, die Verbindung zwischen den Eingängen der Multiplexer-Einheit und jedem RFID-Lesekopf als eine kurze Verdrahtung auszuführen. Störeinflüsse auf die Signale werden somit begrenzt und im Rahmen der parallelen Verdrahtung kann ein allen RFID-Leseköpfen gemeinsamer Nullleiter verwendet werden, was den Verdrahtungsaufwand reduziert.

Um eine eindeutige Zuordnung von den mit den elektronischen Mitteln zur Ventilerkennung detektierten Daten zu den jeweiligen Ventilen zu erhalten, wird vorgeschlagen, dass die Funkstrecke der über die RFID-Leseköpfe aktivierten und je zugeordneten Transponder sehr minimal bemessen ist. Ein minimaler Abstand kann beispielsweise durch Integration von RFID-Lesekopf und Transponder in Gehäusewandungsbereichen erfolgen, welche direkt benachbart aneinander zur Anlage kommen. Da Ventilgehäuse vornehmlich im Spritzgießverfahren aus Kunststoff hergestellt werden, lässt sich ein Transponder hieran in einfache Weise eingießen. Dasselbe gilt analog auch für den grundelementseitigen RFID-Lesekopf. Hierdurch wird vermieden, dass beschädigungsgefährdete Drahtleitungen von der Oberfläche des Grundelements hervorstehen.

Weitere, die Erfindung verbessernde Maßnahmen sind in den abhängigen Ansprüchen angegeben, oder werden nachstehend gemeinsam mit der Beschreibung von bevorzugten Ausführungsbeispielen der Erfindung anhand der Zeichnung näher dargestellt. Es zeigt:
- Figur 1: eine schematische Seitendarstellung einer pneumatischen Ventileinheit in einer ersten Ausführungsform, und
- Figur 2: eine schematische Seitendarstellung einer pneumatischen Ventileinheit in einer zweiten Ausführungsform.

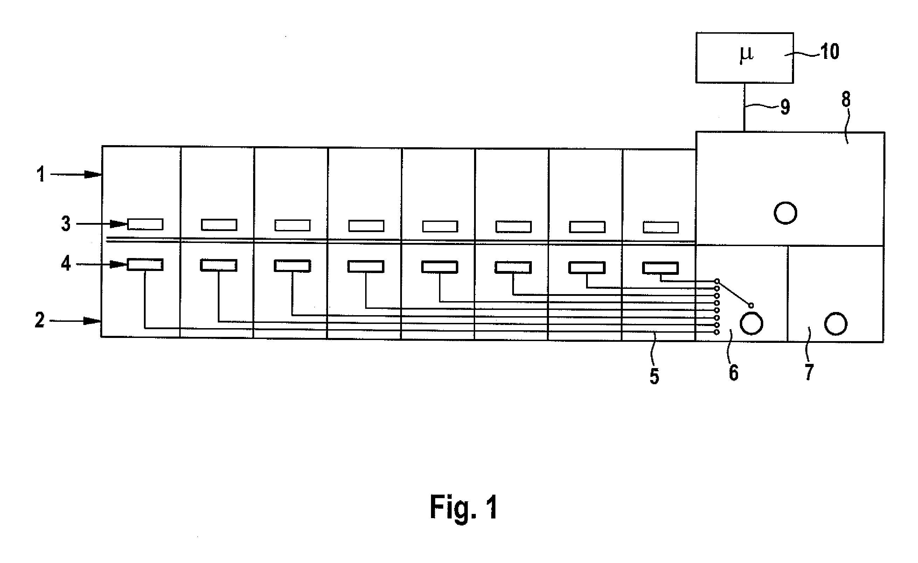

Gemäß Figur 1 besteht die Ventileinheit aus mehreren aneinander gereihten elektropneumatischen Ventilen 1, deren fluidischer und elektrischer Anschluss über ein je zugeordnetes Grundelement 2 erfolgt. Die einzelnen Grundelemente 2 sind ebenfalls aneinandergereiht und besitzen eine - nicht erkennbare - gemeinsame Kanalführung zur fluidischen Versorgung.

Jedes Ventil 1 umfasst einen elektronischen Transponder, in welchem die Ventilkennung in Form einer Seriennummer, Kennung für Ventilfunktion, Herstellungsdatum sowie Chargenkennung hinterlegt sind.

Eine jedem Transponder 3 seitens der Grundelemente 2 zugeordnete Leseeinrichtung umfasst einzelne RFID-Leseköpfe 4, die über eine parallele Verdrahtung mit je einem Signalleiter 5 dem Eingang einer Multiplexereinheit 6 zugehen. Mit der Multiplexereinheit 6 können zyklisch alle RFID-Leseköpfe 4 aktiviert werden, um den je zugeordneten Informationsgehalt der Transponder 3 auszulesen und diesem einer nachgeschalteten RFID-Leseeinheit 7 als serielles Signal zur Verfügung zu stellen.

Die RFID-Leseeinheit 7 vollführt eine Signalbearbeitung und stellt die Daten über eine Busbox 8 per serieller Datenbusleitung 9 einer übergeordneten Steuereinheit 10 zur Verfügung.

Die übergeordnete Steuereinheit 10 vergleicht die Istbestückung der Ventileinheit an Ventilen 1 mit einer hierin abgespeichert hinterlegten vorgegebenen Sollbestückung. Weicht die Istbestückung hinsichtlich beispielsweise Ventilfunktion ab, so wird die insoweit falsche Ventilbestückung erkannt und die elektronische Steuereinheit 10 verhindert ein Wiederanfahren des pneumatischen Systems.

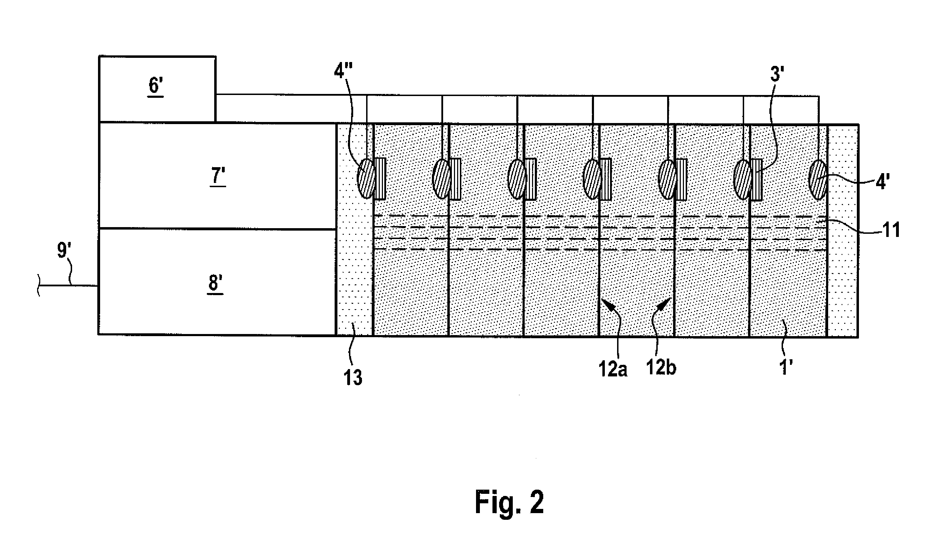

Gemäß Figur 2 handelt es sich um eine Ventileinheit, welche ohne ein Grundelement zur fluidischen oder elektrischen Anbindung auskommt. Hierbei sind Kanäle 11 längs entlang der aneinandergereihten Ventile 1' angeordnet. Diese erfüllen die Funktion der fluidischen Anbindung. Transponder 3' sind im Bereich einer jeden ersten Kontaktfläche 12a jedes Ventils 1' vorhanden, wogegen im selben Ventil 1' an der gegenüberliegenden zweiten Kontaktfläche 12b ein RFID-Lesekopf 4' platziert ist.

Zur Gewährleistung einer Auslesung aller Ventile 1' der Ventileinheit ist seitens einer stirnseitigen Abschlussplatte 13, welche insbesondere zum Verschließen der ventilinternen Kanäle 11 dient, ein weiterer RFID-Lesekopf 4" integriert.

Die aus den RFID-Leseköfpen 4' (exemplarisch) ausgelesenen Ventildaten werden über eine Multiplexeinheit 6' zu einer allen Ventilen 1' gemeinsamen RFID-Leseeinheit 7' geführt. Die insoweit zentrale RFID-Leseeinheit 7' ist Bestandteil einer Busbox 8', über welche in erster Linie die Ventile 1' per Datenbusleitung 9' ihre Ansteuersignale erhalten. Über den Datenbus 9' werden daneben auch Daten zum Vergleich der Istbestückung an Ventilen 1' mit einer vorgegebenen Sollbestückung an eine - nicht weiter dargestellte - zentrale Steuereinheit geleitet.

Die Erfindung ist nicht beschränkt auf das vorstehend exemplarisch angegebene bevorzugte Ausführungsbeispiel. Es sind vielmehr auch Abwandlungen hiervon denkbar, welche vom Schutzbereich der nachfolgenden Ansprüche mit umfasst sind. So ist es beispielsweise auch möglich, die erfindungsgemäßen Mittel zur Ventilerkennung außerhalb der Busbox anzuordnen, um die ventileinheitsinterne Verdrahtung in Bezug auf möglichst kurze Signalwege zu optimieren.

### Bezugszeichenliste

- **1**: Ventile
- **2**: Grundelemente
- **3**: Transponder
- **4**: RFID-Leseköpfe
- **5**: Signalleitung
- **6**: Multiplexereinheit
- **7**: RFID-Leseeinheit
- **8**: Busbox
- **9**: Datenbusleitung
- **10**: Steuereinheit
- **11**: Kanal (fluidisch)
- **12**: Kontaktfläche
- **13**: Abschlussplatte

## Patentansprüche

1. Ventileinheit mit mehreren aneinandergereihten Ventilen (1; 1') zum Schalten eines Druckluftflusses, welche je mindestens einem Grundelement (2) zur fluidischen und/oder elektrischen Anbindung zugeordnet sind, wobei aus je ventilseitigen Transpondern (3; 3') und einer grundelementseitigen Leseeinrichtung bestehende elektronische Mittel zur Ventilerkennung vorgesehen sind,
**dadurch gekennzeichnet, dass** die Leseeinrichtung aus einzelnen, je einem Transponder (3) zugeordneten RFID-Leseköpfen (4) sowie einer allen RFID-Leseköpfen (4) gemeinsamen RFID-Leseeinheit (7) besteht, wobei die RFID-Leseköpfe (4) mit der RFID-Leseeinheit (7) über eine Multiplexereinheit (6) verbunden sind.

2. Ventileinheit nach Anspruch 1,
**dadurch gekennzeichnet, dass** neben den Ventilen (1) eine Busbox (8) zum Anschluss an eine serielle Datenbusleitung (9) vorgesehen ist, welche weiterhin die Multiplexereinheit (6) mit nachgeschalteter RFID-Leseeinheit (7) beinhaltet.

3. Ventileinheit nach Anspruch 2,
**dadurch gekennzeichnet, dass** die Busbox (8) mit einer übergeordneten Steuereinheit (10) zum Vergleich der Istbestückung an Ventilen (1) mit einer vorgegebenen Sollbestückung in Verbindung steht.

4. Ventileinheit nach einem der vorstehenden Ansprüche,
**dadurch gekennzeichnet, dass** jedem Ventil (1) ein eigenes Grundelement (2) zugeordnet ist, welche fluidisch und/oder elektrisch aneinander gekoppelt sind.

5. Ventileinheit mit mehreren über korrespondierende Kontaktflächen (12a, 12b) aneinandergereihten Ventilen (1; 1') zum Schalten eines Druckluftflusses, welche gemeinsame längslaufene Kanäle (11) zur fluidischen und/oder elektrischen Anbindung aufweisen, wobei in jedem Ventil (1; 1') ein zugeordneter Transpondern (3; 3') integriert ist, der mit elektronischen Mitteln zur Ventilerkennung zusammenwirkt,
**dadurch gekennzeichnet, dass** der Transponder (3') im Bereich der ersten Kontaktfläche (12a) und zur Ventilerkennung ein RFID-Lesekopf (4') im Bereich der gegenüberliegenden zweiten Kontaktfläche (12b) angeordnet ist, wobei die Leseeinrichtung eine allen RFID-Leseköpfen (4') gemeinsame RFID-Leseeinheit (7') umfasst, und die RFID-Leseköpfe (4') mit der RFID-Leseeinheit (7') über eine Multiplexereinheit (6') verbunden sind.

6. Ventileinheit nach Anspruch 5,
**dadurch gekennzeichnet, dass** an einer Kontaktfläche (12a) der Ventile (1') eine Busbox (8') zum Anschluss an eine serielle Datenbusleitung (9') angeordnet ist, welche weiterhin die Multiplexereinheit (6') mit nachgeschalteter RFID-Leseeinheit (7') beinhaltet.

7. Ventileinheit nach Anspruch 6,
**dadurch gekennzeichnet, dass** die Busbox (8') mit einer übergeordneten Steuereinheit (10') zum Vergleich der Istbestückung an Ventilen (1') mit einer vorgegebenen Sollbestückung in Verbindung steht.

8. Ventileinheit nach einem der vorstehenden Ansprüche,
**dadurch gekennzeichnet, dass** die Multiplexereinheit (6; 6') nach Art eines Mehrfach-Multiplexers zum Umwandeln der parallelen Signale der RFID-Leseköpfe (4; 4') in ein serielles Bussignal ausgebildet ist, dessen Anzahl der Eingänge mindestens der Anzahl der RFID-Leseköpfe (4; 4') entspricht.

9. Ventileinheit nach einem der vorstehenden Ansprüche,
**dadurch gekennzeichnet, dass** die Multiplexereinheit (6; 6') zur flexiblen Anpassung an eine gewünschte Anzahl von Ventilen (1; 1') modular aus mehreren Multiplexerelementen mit definierter Anzahl an Eingängen aufgebaut ist.

10. Ventileinheit nach einem der vorstehenden Ansprüche,
**dadurch gekennzeichnet, dass** die Verbindung zwischen den Eingängen der Multiplexereinheit (6; 6') und jedem RFID-Lesekopf (4; 4') als eine entlang der Ventile (1) verlaufende parallele Verdrahtung mit je RFID-Lesekopf (4; 4') zugeordnetem Signalleiter (5; 5') und einem gemeinsamen Nulleiter ausgeführt ist.

11. Ventileinheit nach einem der vorstehenden Ansprüche,
**dadurch gekennzeichnet, dass** die Funkstrecke der über die RFID-Leseköpfe (4; 4') aktivierten und je zugeordneten Transponder (3; 3') derart minimal bemessen ist, dass sich eine eindeutige Zuordnung zu den Ventilen (1, 1') ergibt.
